(19)

Europäisches
Patentamt
European
Patent Office
Office européen
des brevets

(11) **EP 3 779 755 B1**

(12) **EUROPEAN PATENT SPECIFICATION**

(45) Date of publication and mention
of the grant of the patent:
**13.09.2023 Bulletin 2023/37**

(21) Application number: **19191861.4**

(22) Date of filing: **14.08.2019**

(51) International Patent Classification (IPC):
**G06Q 20/06** (2012.01)   **G06Q 20/38** (2012.01)
**H04L 9/40** (2022.01)   **H04L 9/00** (2022.01)
**G06F 21/62** (2013.01)   **G06F 21/64** (2013.01)
**H04L 9/32** (2006.01)

(52) Cooperative Patent Classification (CPC):
**G06F 21/645; G06F 21/6236; G06Q 20/065;
G06Q 20/38; G06Q 20/3827; H04L 9/3239;
H04L 9/50; H04L 63/00;** G06Q 2220/00

(54) **A COMPUTER-IMPLEMENTED METHOD FOR CROSS-CHAIN-INTEROPERABILITY**

COMPUTERIMPLEMENTIERTES VERFAHREN ZUR KETTENÜBERGREIFENDEN
INTEROPERABILITÄT

PROCÉDÉ MIS EN ŒUVRE PAR ORDINATEUR POUR L'INTEROPÉRABILITÉ INTER-CHAÎNES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**17.02.2021 Bulletin 2021/07**

(73) Proprietor: **FUJITSU LIMITED
Kanagawa 211-8588 (JP)**

(72) Inventor: **MUELLER, Jonas
Hayes, Middlesex UB4 8FE (GB)**

(74) Representative: **Haseltine Lake Kempner LLP
Cheapside House
138 Cheapside
London EC2V 6BJ (GB)**

(56) References cited:
**WO-A2-2019/072301     US-A1- 2018 219 685**

- **YIMING JIANG ET AL: "A Cross-Chain Solution
to Integrating Multiple Blockchains for IoT Data
Management", SENSORS, vol. 19, no. 9, 1 May
2019 (2019-05-01), page 2042, XP055667385, DOI:
10.3390/s19092042**
- **Miguelmota: "docstampit.it", , 5 May 2018
(2018-05-05), XP055661823, Retrieved from the
Internet:
URL:https://github.com/CoinCircle/docstamp .it
[retrieved on 2020-01-24]**
- **Miguelmota: "DocStamp.sol", , 12 November
2017 (2017-11-12), XP055661824, Retrieved from
the Internet:
URL:https://github.com/CoinCircle/docstamp .it/
blob/master/contracts/DocStamp.sol [retrieved
on 2020-01-24]**

EP 3 779 755 B1

**Description**

The present invention relates to a computer-implemented method to enable access to data stored on a first blockchain network from a second blockchain network. It has wide applicability in hybrid blockchain solutions to provide a trusted environment between known stakeholders and support data processing with privacy and confidentiality mechanisms in place.

**Background**

As a general statement, the amount of blockchain-related technologies, start-ups and projects is increasing. In particular, there exist some examples of public blockchain use-cases that serve consortium needs and other examples of use-cases that rely on private blockchain protocol approaches, using blockchains that are private or permissioned with access controls that restrict those that may join the network. Beyond this distinction, a significant number of use-cases rely on cross-chain approaches, for example in which blockchain transactions may be processed by connecting transactions across different blockchain networks and/or technologies and/or protocols to gain business value within their specific fields. Therefore, these use-cases face limitations due to the significant challenges that arise with cross-chain interoperability. Use-cases that rely on cross-chain interoperable processing often take a user-centred approach, where private and confidential data can be accessed by the public when necessary, in order to enhance trust and transparency.

With the current state of interoperability applications between private and public blockchain networks, mainly issues concerning virtual currencies are addressed and solved.

While existing approaches assist in solving the exchange of currencies, they do not address the exchange of files or generic data. For example, currencies can be expressed with data of a small size, but when larger file sizes are handled, particularly when it comes to the point of interaction with a public (permissionless) blockchain network, high transaction fees may be experienced. Generally, the goal is not to store large (or too many files) files "on-chain" and thus as part of the network/on the distributed ledger, but still enable as much trust and transparency as possible.

Embodiments of the invention aim to facilitate interoperability between two or more blockchain networks.

Yiming Jiang et al: "A Cross-Chain Solution to Integrating Multiple Blockchains for IoT Data Management" SENSORS, vol. 19, no. 9, May 2019, discloses an integrated blockchain system including IPFS storage for IoT data.

US 2018/219685 A1, WO 2019/072301 A2, Miguelmota: "docstampit.it" URL:https:// github.com/CoinCircle/docstamp.it (2018-05-05) (XP055661823) and "DocStamp.sol", URL:https://github.com/CoinCircle/docstamp.it/blob/master/contracts/DocStamp.sol (2017-11-12) (XP055661824) provide further prior art.

**Summary**

The invention is defined in the independent claims, to which reference should now be made. According to an embodiment of a first aspect of the invention, there is provided a computer-implemented method according to claim 1).

The inventor has found a way of improving interoperability between a first blockchain and a second blockchain without placing too high a burden on the second blockchain. The method may allow the user to retrieve the data using the hash value and to check that the data originally stored on the first blockchain network and data corresponding to the hash stored on the second blockchain network are identical. In this way, the user may check for modification to the data, whether unintentional, intentional, or simply by updates. Thus, information from the first blockchain may be accessed in a trust-worthy form using the second blockchain by comparison of the hash values.

The file system may store the hash value separately when the data is stored, or regenerate the hash value each time there is a query or both.

For a further check, the file system may be refreshed with the data from the second blockchain network, either automatically or on command. Additionally or alternatively, the method may comprise comparing a hash of the data stored on the first blockchain network with a hash of the data in the file system and/or the hash value stored on the second blockchain network. Of course, this is only possible if access is granted to the hash value stored on the first blockchain. According to these embodiments, the user (with access to the second blockchain) is reassured that the data to be accessed from the file system is identical to the data currently stored in the file system.

Embodiments allow improved interoperability between multiple blockchain networks (for example, each operating in a distributed environment) without the need to store files of a large size (or too many files) "on-chain", instead storing only a cryptographic hash "on chain" (which may be many orders of magnitude smaller than the data to which it corresponds). The cryptographic hash may be used as a content identifier, enabling user access to the data. By storing only the hash "on-chain", any issues concerning excessive monetary and computational costs incurred by the blockchain network (for example, in the form of Ethereum Gas usage, as detailed later) are mitigated relative to the case where the full data to which the hash corresponds is stored "on-chain".

In some embodiments, the method may further retrieve data stored in (or on) the file system associated with the second blockchain network. This retrieval may only be carried out when the hash value stored on the second blockchain corresponds to a hash value of data stored on the first blockchain, or the user may receive an indication that the hashes do not match. That is, the user may be assured that the data stored on the first blockchain matches (without any interceding modification) the data that they are acquiring from the second blockchain.

In the event that the hash value stored on the second blockchain does not correspond to a hash value of data stored on the first blockchain, it may be that the method indicates that the data has been manipulated or modified, thereby providing reassurance of data authenticity to the user.

These embodiments enable data exchange between blockchain networks while storing data "off-chain" (not as part of the network/distributed ledger). The data is, however, still stored in a trustful peer-to-peer environment by using the hash function of any suitable data storage (referred to herein as a file system, since the data is most likely to be stored as files). By using the hash, modifications may be visible to the user and data size may be reduced to a minimum, which may lead to a considerable reduction of transaction costs on the second blockchain network.

Embodiments may enable data exchange from one blockchain protocol to another if the blockchains operate with different protocols. In this way, there is no requirement for the two (or more) blockchains involved in the interoperability procedure to be built on the same protocol or consensus method. For example, the first blockchain network may operate on a proof-of-work consensus algorithm (the solving of computationally intensive puzzles to validate transactions and create new blocks) while the second blockchain network may operate on a proof-of-stake consensus algorithm (the creator of the next block is chosen via various combinations of random selection and wealth or age, i.e., the stake). Blockchain networks using proof-of-authority, proof-of-space, or indeed any other consensus mechanism may become interoperable with this method.

The first blockchain network is a private (permissioned or consortium) blockchain. The private blockchain network may be Hyperledger, R3 Corda, Quorum, or any other form of private blockchain network. In this way, only trusted users may store and/or access data on the first blockchain network. From a performance perspective, only a few nodes may be required to process transactions, thereby increasing processing speed, computational cost, and electricity consumption. Further, the second blockchain is a public (permissionless) blockchain. In this way, the distributed ledger is openly accessible (readable/writeable) to anyone. By utilising both private and public blockchain networks, embodiments of the method may enable public data access to a privately stored file without the need to store large data files on the public blockchain network.

Is some embodiments, the method may be applied only to handling data files of a size that, to store directly on the second blockchain network, would be unduly computationally expensive. The transaction cost of the operation to store the data "on chain" on the second blockchain network may be considered relative to the transaction cost to store the same data on the first blockchain network. For example, it may be that the method is limited to handling data files that, to store on the second blockchain network, require a transaction cost at least double that of storing the same data on the first blockchain network. Any other comparative determination of cost may be used (for example, triple, quadruple, ten times etc.)

Additionally and/or alternatively, embodiments of the method may be applied only to handling data files on the basis of the data size in comparison to the hash size. That is, the transaction cost of the operation to store the data "on chain" on the second blockchain would exceed the transaction cost of the operation to store a hash for the data "on chain" on the second blockchain. For example, a data file of 100 megabytes may have a hash of 150 bytes and, similarly, a data file of 10 bytes may have a hash of 150 bytes; embodiments of the method may be limited to handle data only when a reduction in size is by a factor of 10, (or 100, or 1000) or more, as in the first scenario. In this way, there may be a reduction in unnecessary computational expense.

The data from the first blockchain network may be of any data format. For example, the data may be structured into a key-value (name-value or attribute-value) format, thus enabling storage on the first blockchain network within a key-value compatible store or database. Access to the data may be possible through querying the key, the value, or both the key and value. The data may, for example, be of a JavaScript Object Notation (JSON) format. The method may not be restricted to accept files of identical format, for example I-JSON, OGDL, XML, YAML, CSV, and/or any other suitable files may additionally be accepted or processed.

The file system associated with (accessible by) the second blockchain network may be any suitable system which may automatically or on command generate a hash value which corresponds to and uniquely identifies the data. For example, a content-addressable storage system may be used, which foregoes the need to store the data permanently in a single location. Instead, the data information content itself may be stored and any document connected to the peer-to-peer network that matches the data information content may be retrievable. For example, the file system may be reliant on an inter-planetary-file system (IPFS) protocol, which is a peer-to-peer transfer protocol and is a versioned file system, enabling storage and management of files with the ability to enable tracking over a time period. IPFS also enables the ability to track movement of files across the network, which defines IPFS as a distributed file system. Alternatively, the file system may be any other type of storage system, including a document-addressable storage system.

The means by which the hash value is stored on the second blockchain network may be implemented or initiated by a standalone software module or by a smart contract (or chaincode) installed or instantiated on the second blockchain network. For example, a smart contract may be executed by the user or automatically upon some other event (uploading of a document to the first blockchain network, for example), which may store the data on the file system associated with the second blockchain network. The smart contract may additionally or alternatively initiate the updating of the ledger state (the world state) to include the hash for the data. A smart contract may be written in any suitable programming language, for example Solidity, Go, or Java.

Embodiments of the method may further consider log files of the data. The method may involve the creation and/or acquisition of log files on/from the first blockchain network. By storing these log files on the second blockchain network, further evidence of data authenticity to those outside of the first blockchain network may be provided. The log files may be duplicates of the original data and/or may include a timestamp (time and date) or any other metadata to verify the provenance of the data. The log files stored on the second blockchain network may be used in a comparison with metadata such as log files of the data that corresponds to the hash value stored on the second blockchain network (that is, metadata of the corresponding data stored in the file system). In this way, further evidence may be provided that the data has not been manipulated between the interoperable blockchain networks.

In some embodiments, the method may further enable the retrieval of data stored in the file system only when the log file also stored in the file system corresponds to the log file of the data on the first blockchain network (for example, when the timestamps of the data match). In this way, data authenticity between the blockchains is further enforced. Data retrieval from the file system may only be possible when the compared data (in the file system) corresponds to the stored hash value on the second blockchain network (and potentially also the stored hash value on the first blockchain network if that hash value is accessible) and when the log file of the compared data corresponds to the log file of the document corresponding to the stored hash value.

The log file of the data may be stored on the first blockchain network. For example, the log file may be stored in a database on the first blockchain network, or the log file may be stored on the ledger of the first blockchain network. In this way, the user may be afforded even greater assurances that the data stored on the first blockchain network is that accessible from the second blockchain network. The log file stored on the first blockchain network (and the hash value) may be granted permissions such that users outside of the first blockchain network can access it even if they are not granted permissions to access the data file to which it is associated.

According to an embodiment of a second aspect of the invention, there is provided an interoperability application according to claim 10.

The interoperability application may offer functionality to the user to input and/or retrieve data from the blockchain networks. It may be that the functionality only enables the user to retrieve the data from the file system in the event that the application indicates that the data on the first blockchain network (in the form of its hash value) matches the (data corresponding to) the hash on the second blockchain network. Alternatively, it may be that the data is retrievable but a notification may be provided to the user indicating that the data do not match or that the data have been modified or manipulated.

The first interface of the interoperability application may comprise one or more constituent components or modules. For example, the first interface may comprise a communication module to establish communication to a blockchain network. Additionally and/or alternatively, the first interface may comprise a software development kit (SDK) and/or an application programming interfaces (API) to enable communication between any other interfaces and the blockchain network by, for example, proceeding with the necessary functions.

The second interface of the interoperability application may comprise numerous constituent components or modules. For example, the second interface may comprise a communication module to establish communication to a blockchain network. The communication module may also establish or enable communication between the application and a file system associated with the blockchain network. Alternatively, multiple distinct communication modules may be provided, which may interface with one another. Additionally and/or alternatively, the second interface may comprise an API that enables communication between any communication modules and any part of the blockchain network by, for example, proceeding with the necessary functions and/or executing any necessary smart contracts.

According to an embodiment of a third aspect of the invention, there is provided a computer according to claim 14.

According to an embodiment of a fourth aspect of the invention, there is provided a computer program which when loaded onto the at least one computer configures the at least one computer to carry out the method according to any of the preceding method definitions or any combination thereof. The program may execute locally or on the cloud to provide the access enabling method at a local device.

An apparatus (computer or computer system) or computer program according to preferred embodiments of the present invention may comprise any combination of the method aspects. Methods or computer programs according to further embodiments may be described as computer-implemented in that they require processing and memory capability.

The apparatus according to preferred embodiments is described as configured or arranged to, or simply "to" carry out certain functions. This configuration or arrangement could be by use of hardware or middleware or any other suitable system. In preferred embodiments, the configuration or arrangement is by software.

Thus according to one aspect there is provided a program which, when loaded onto at least one computer configures the computer to become the apparatus according to any of the preceding apparatus definitions or any combination thereof.

In general the computer may comprise the elements listed as being configured or arranged to provide the functions defined. For example this computer may include memory, processing, and a network interface, as well as an input device.

The invention may be implemented in digital electronic circuitry, or in computer hardware, firmware, software, or in combinations thereof. The invention may be implemented as a computer program or computer program product, i.e., a computer program tangibly embodied in a non-transitory information carrier, e.g., in a machine-readable storage device, or in a propagated signal, for execution by, or to control the operation of, one or more hardware modules.

A computer program may be in the form of a stand-alone program, a computer program portion or more than one computer program and may be written in any form of programming language, including compiled or interpreted languages, and it may be deployed in any form, including as a stand-alone program or as a module, component, subroutine, or other unit suitable for use in a data processing environment. A computer program may be deployed to be executed on one module or on multiple modules at one site or distributed across multiple sites and interconnected by a communication network.

Method steps of the invention may be performed by one or more programmable processors executing a computer program to perform functions of the invention by operating on input data and generating output. Apparatus of the invention may be implemented as programmed hardware or as special purpose logic circuitry, including e.g., an FPGA (field programmable gate array) or an ASIC (application-specific integrated circuit).

Processors suitable for the execution of a computer program include, by way of example, both general and special purpose microprocessors, and any one or more processors of any kind of digital computer. Generally, a processor will receive instructions and data from a read-only memory or a random access memory or both. The essential elements of a computer are a processor for executing instructions coupled to one or more memory devices for storing instructions and data.

The invention is described in terms of particular embodiments. Other embodiments are within the scope of the following claims. For example, the steps of the invention may be performed in a different order and still achieve desirable results. Multiple test script versions may be edited and invoked as a unit without using object-oriented programming technology; for example, the elements of a script object may be organized in a structured database or a file system, and the operations described as being performed by the script object may be performed by a test control program.

Elements of the invention have been described using the terms "processor", "interface" etc. The skilled person will appreciate that such functional terms and their equivalents may refer to parts of the system that are spatially separate but combine to serve the function defined. Equally, the same physical parts of the system may provide two or more of the functions defined. An interface may be a software component interposed between other software components

For example, separately defined means may be implemented using the same memory and/or processor as appropriate.

**Brief Description of the Drawings**

Preferred features of the present invention will now be described, purely by way of example, with references to the accompanying drawings, in which:-

Figure 1 is a diagram illustrating an example of a transaction in the prior art;
Figure 2 is a diagram illustrating an example of a transaction with a blockchain network in the prior art;
Figure 3 is a plot of gas usage in transactions of increasing data size on the public Ethereum blockchain network;
Figure 4 is a plot of a gas cost in USD in transactions of increasing data size on the public Ethereum blockchain network;
Figure 5 is a flowchart illustrating a general embodiment of a computer-implemented method to access data from a first blockchain network via a second blockchain network;
Figure 6 is a schematic diagram illustrating a general embodiment of an interoperability application and its interfaces with blockchain networks;
Figure 7 is a diagram illustrating an example of a transaction with two blockchain networks using the interoperability application;
Figure 8 is a flowchart describing the storage and access of data on interoperable blockchain networks;
Figure 9 is a flowchart describing the storage and access of data on interoperable blockchain networks incuding log files;
Figure 10 is a diagram illustrating a general system architecture suitable for interoperable blockchain networks and the interaction of components;

Figure 11 is a schematic diagram illustrating a specific example of an interoperability application and its interfaces with interoperable blockchain networks;

Figure 12 is a diagram illustrating a method of data registration on a private blockchain network;

Figure 13 is a diagram illustrating a method of data query on a private blockchain network;

Figure 14 is a diagram illustrating a method of data storage, query, and display on a public blockchain network; and

Figure 15 is a plot comparing gas usage in transaction of increasing data size with and without the use of an embodiment of the interoperability method; and

Figure 16 is a diagram of suitable hardware for implementation of invention embodiments.

## Description

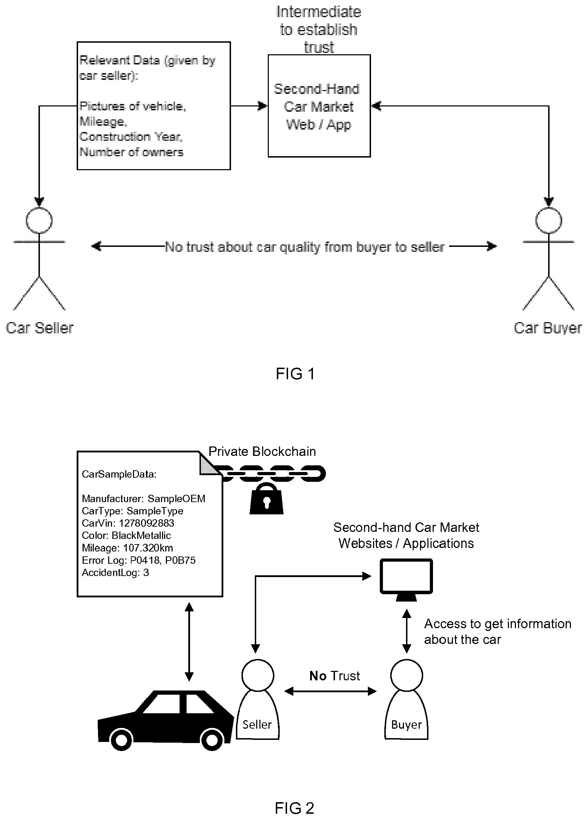

To understand example use-cases of blockchain in detail, it is important to give some overview about the process today. As an example, FIGURE 1 depicts an overview of the second-hand car market sale as of today. Within the example sale process, the car seller decides to sell a car over a second-hand car market website or application. The information therefore comes from pictures of the vehicle, the mileage, the construction year, and the previous number of owners. This data is provided by the car seller, which means there is no other trusted resource for the validation of this information until a viewing of the car is made by the car buyer. In case the car buyer is no expert regarding the technical aspects of a car, there may be a possibility of data manipulation by the car seller. Also on the viewing, the non-expert car buyer may not find any technical issues, which would lead to a more correct re-estimation of the real car value.

FIGURE 2 shows an example automotive consortium, which is based on a private Hyperledger Fabric blockchain, consisting of OEMs, insurance suppliers, repair Workshops, and car drivers. In this use-case, the data that is stored on the blockchain is the following data: mileage (in km), error codes, accident history, and various other unique identifiers of the car such as colour, vehicle identifier number (VIN), and model. To estimate the quality of the car, insights regarding the status of these attributes are considered as valuable. This data is stored on the private blockchain network and updated on a frequent basis (for example, every 24 hours). The car driver might decide that the car will be sold via an open, accessible website that addresses car buyers and sellers on the second-hand car market. The second-hand car market faces a problem of car under/over valuation due to the manipulation of odometer values. The basic problem lies is a lack of trust between the buyer and the seller domain. To enable the trust without intermediaries, it is desirable to process data from the private blockchain to the public blockchain, thus rendering illicit manipulation of any value visible. That is, a solution requires interoperability between blockchain networks.

Interoperable approaches target public users who have no access to private blockchain consortiums centred on private blockchains that are limited in access by permissions, such as by an access control layer. It may be desirable to provide the user access to the private blockchain on request, but this often does not comply with any security models of the private blockchain systems and could lead to heavy security vulnerabilities. Public blockchains address this issue with such mechanisms as transaction fees and consensus algorithm design. Further interoperability approaches for access and authentication of the processed data between private and public blockchain systems are desirable.

Interoperability is considered as a complex and challenging research field within the area of blockchain technology. With the increasing number of projects, startups, and different blockchain protocols, there is an increasing demand for cross-chain interaction. Since many different existing blockchain protocols address their challenges with different technical attributes, such as different consensus protocols, transaction processing methods, or other valuable mechanisms, a limitation on establishing common interaction between the different protocols exists.

Additionally, there exists a need for verification of the data authenticity between interoperable blockchains: whenever data from a private blockchain is published to another party via a public blockchain, it is desirable to ensure that this data is authentic and not manipulated during processing.

A concern lies in the monetary and the computational costs of an interoperable approach. As an example of one public blockchain network protocol, let us consider Ethereum. On Ethereum, the transaction fee - also defined as gas price - increases heavily with the size of the data that is attached with a transaction. The gas price is calculated by the amount of gas, which is used to operate in any way with the Ethereum blockchain network. The calculation of transaction execution costs in the public Ethereum blockchain, according to the yellow paper (the formal definition of the Ethereum protocol), is given by:

$$g_0 \equiv \sum_{t \in T_{1,T_d}} \left\{ \begin{array}{l} G_{txdatazero} \\ G_{txdatanonzero} \end{array} \right.$$

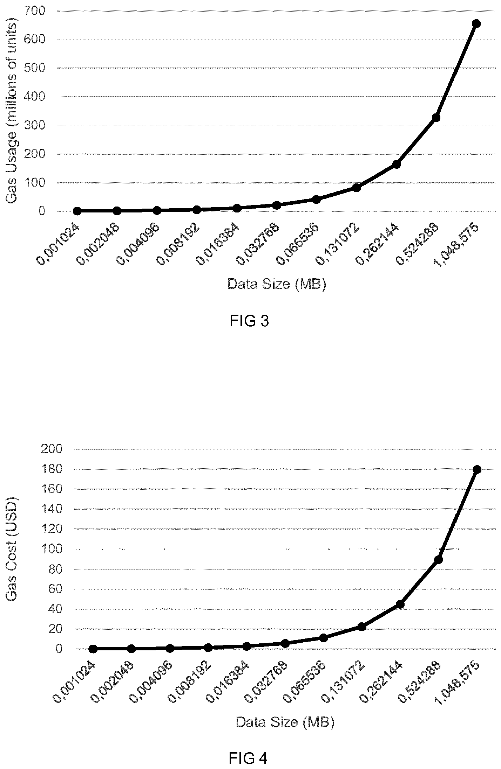

where $g_0$ is the intrinsic gas and, $T_{1,T_d}$ defines the series of bytes that refers to the specific amount of data used within the transaction. *G* refers to the specific operation of the smart contract. FIGURE 3 illustrates the amount of gas consumed in a transaction according to the attached data size. A high amount of gas consumed can be observed when the data size increases above 150 kilobyte. According to an ASCII Table, this amount of data can be compared equally to 150,000 letters (characters) as a file content.

FIGURE 4 illustrates the calculated gas costs (in USD) of the same transaction in relation to its attached data size. The costs of a transaction, which stores 130 kilobyte to the public Ethereum blockchain with the current Ether price can be estimated at approximately 20 USD (calculated on 20th March 2019). The price of a transaction that stores one megabyte on the blockchain is calculated at approximately 179 USD.

By analysing both FIGURES 3 and 4, it is obvious that there is a monetary limit faced by many blockchain use-cases, particularly when it comes to the need to store data on the public Ethereum blockchain. With no (or at least insignificant) limitations to the storage of such small data files, private (or consortium) blockchain protocols are able to serve blockchain use-cases with data sizes that are conventionally considered unsuitable to be stored on public blockchains due to transaction costs. To serve use-cases that rely on both public and private mechanisms, other technologies rely mainly on the limitation of file size, which may cause an undesirable loss of data and information.

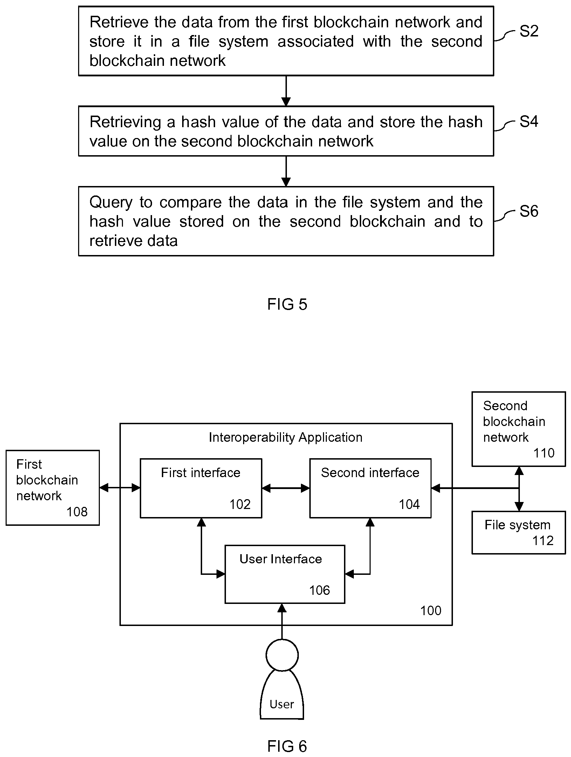

FIGURE 5 is a flowchart of a computer-implemented method to access data from a first blockchain network via a second blockchain network according to a general embodiment. In this method, the user and/or an automated system retrieves data stored on a first blockchain network. The method then stores this data in a file system associated with a second blockchain network (S2). This retrieve and store may be a periodic automatic update, which potentially also creates a hash of the data. The method retrieves this cryptographic hash value of the data from the file system, or creates such a hash value, and stores the hash on the second blockchain network (S4). A comparison is then made between the data stored in the file system associated with the second blockchain network and the hash value stored on the second blockchain network to retrieve the data (and check that the data is identical (S6)). For example, the hash value for the data may already be stored on the file system or may be re-created. Then the two hash values may be compared. Additionally or alternatively, a comparison of the hash value on the second blockchain with the hash value for the data on the first blockchain may be carried out, if permitted, or the log files for the data on the first blockchain network may be compared with log files for the data stored in the file system.

FIGURE 6 is a schematic overview of a general embodiment of the interoperability application (100), which is a software product running, for example on a RESTful (Representational State Transfer) server, on the cloud and accessible to various users. A first interface (102) interfaces between the interoperability application (100) and the first blockchain network (108) to retrieve data. A second interface (104) interfaces between the interoperability application (100) and the second blockchain network (110) and between the interoperability application (100) and the file system (112), to store the data to the file system, retrieve a hash value from the sile system and store the hash value on the second blockchain network. The file system (112) may be within the second blockchain network (112) or outside (it may be a distributed file storage system). A user interface (106) may connect and communicate with both the first interface (102) and the second interface (104). This interface may be a Graphical User Interface (GUI), for example allowing windows to be displayed presenting instructions to the user and/or presenting the retrieved data using the file system and hashes. It allows the users with no access to the private blockchain network to specify the data that they wish to access from the first blockchain network and to view the data (after its storage and retrieval using a public blockchain network according to embodiments), as well as any messages about the data trustworthiness (such as "data verified" or "data not verified"), for example as a result of whether the hashes match. The GUI may also display metadata of the data, such as a date or provenance. The GUI may also work for a user with access to the private blockchain network, to store and retrieve data. The first interface (102) and the second interface (104) may communicate directly.

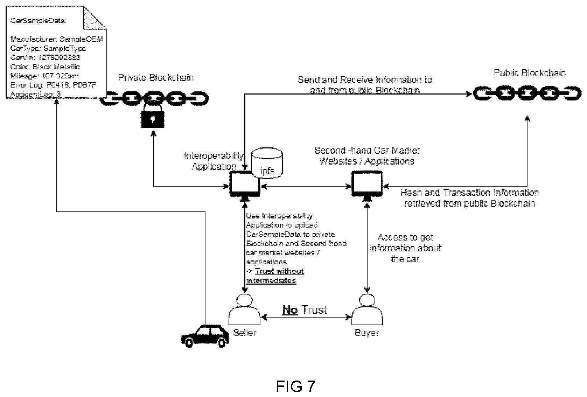

FIGURE 7 depicts an example automotive consortium, which is based on a private Hyperledger Fabric blockchain, as in Figure 2. If there were no interoperability application in this example transaction (that is, the schematic would resemble the scenario of Figure 2), no trust would exist directly between the buyer and the seller of the car. However, the interoperability application allows for the sample car data to be uploaded to the IPFS linked to the private blockchain and allows for the retrieval of the unique hash for the car data. This information is then sent to the public blockchain. If a car buyer wishes to access the car data, the second-hand car market websites/applications may interface with the interoperability application and acquire the hash from the public blockchain. Access to the car data on the IPFS is then enabled, and the car buyer may view the relevant information about the car. In this way, any illicit manipulation or change of the car sample data on the IPFS is evident through any update to the (immutable) public blockchain stored hash.

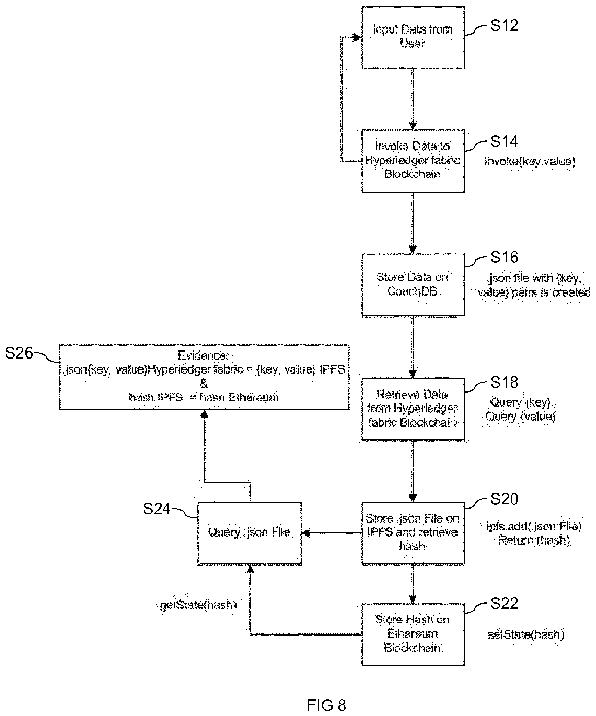

FIGURE 8 is a flowchart describing the storage and access of data on interoperable blockchain networks according to one embodiment. The interoperability between private blockchain consortiums and public blockchain networks is a well-known problem. In the past, this problem was mainly solved by establishing mechanisms to exchange virtual currency, which can be expressed with small size of data. But when large files are handled, high transaction fees may be caused. The approach presented here enhances previous approaches by establishing a mechanism to overcome the interoperability problem and introducing a mechanism to exchange data between both of the blockchain protocols.

Initially, a user inputs data in a key/value format (S12), which is stored on a private blockchain (a Hyperledger fabric blockchain in this example) by an invoke function (S14). The key/value pair is stored in the form of a JSON file on a CouchDB component of the private blockchain (S16). From the CouchDB, the (private blockchain network) user has the ability to retrieve the data by querying either the key, the value, or both (S18). The retrieved JSON file is stored to the IPFS associated with the public blockchain by the "ipfs.add" function, which additionally returns a hash of the file (S20). The hash is stored to the public (Ethereum) blockchain by a "setstate" command within the smart contract (S22). The hash is then retrievable from the public blockchain by the "getState" function.

By querying the JSON file (S24), the related hash from the IPFS and the related hash from the public blockchain, a comparison can be made for verifying that the JSON file is not or has not been modified by malicious manipulation (S26). In this way, evidence is provided that the data on the first blockchain network and accessible to the second blockchain network is identical. With the step of storing the JSON file via the IPFS and storing the hash to the public blockchain, the interoperability between both public and private blockchain protocols is ensured.

The problem of processing data between the private and public blockchains is also addressed. That is, the high transaction costs typically derive from the public blockchain. Earlier inventions address the exchange of virtual currency, but fail to exchange files, which are measured by their size. By storing only the hash of the data on the public blockchain, the size is limited to a minimum, which leads to lower transaction costs. In detail, the storage of the JSON file to the IPFS returns a hash, which is stored to the public blockchain by the "setstate" function and leads to a notable reduction of transaction costs.

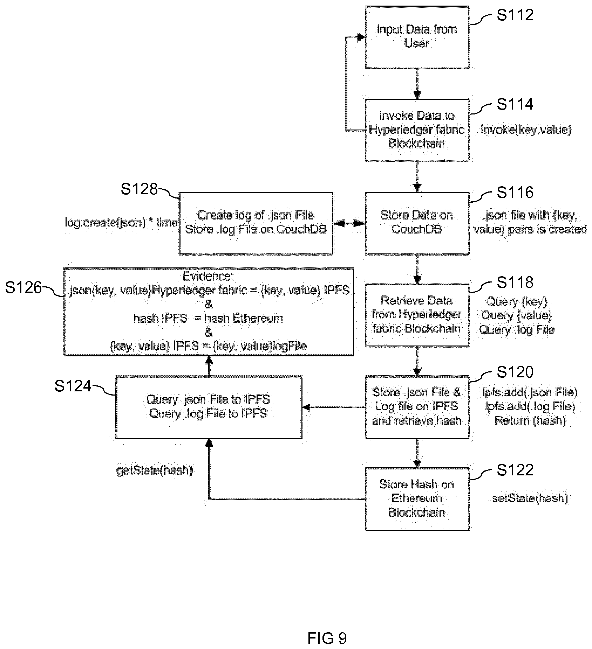

FIGURE 9 is a flowchart describing the storage and access of data on interoperable blockchain networks according to another embodiment. Approaches to interoperability are afflicted with issues concerning a lack of data authenticity across interoperable networks. With recent approaches it has been impossible to establish a data access from a private blockchain to a public blockchain because of data access limitation to private blockchain. It is desirable to have (outside of the private blockchain) evidence regarding the processed data from the private blockchain.

To overcome this problem, the supplemental mechanism of creating and using log files, which are access logs and are still accessible to private blockchain in order to prove data authenticity, is used. To ensure that the data that is published towards users outside of the private Blockchain consortium is authentic, a new component is added to the application flow. Relative to the logic described in FIGURE 7, many of the steps remain unchanged apart from their numbering and therefore they are not described again here.

By using a logging function as additional step S128, historic evidence for the JSON file is created. The logging function duplicates the JSON file and stores the copy as well as the time stamp (time and date) of the file to the CouchDB (S128). The log file is also added to the IPFS (S120, replacing S20 in Figure 8), where it can be queried (S124 replacing S24) and compared to the original JSON file (S126, replacing S26). Any modification over time is visible, which provides further evidence regarding the authenticity of the file.

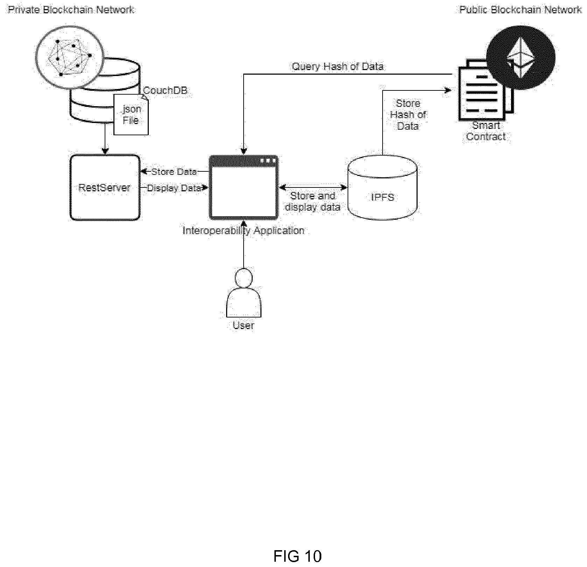

FIGURE 10 is a schematic diagram of a general system architecture suitable for interoperable blockchain networks, which describes the interaction between components. A private blockchain is shown to the left and a public blockchain to the right. The new interoperability application running via a RESTful server to store data and provide data for display, interfaces between the two blockchain networks, and IPFS storage is provided for storage of data which may be for display. Data, which mainly exist in the form of a JSON format, will be gathered from the world state database (CouchDB, for example) of the private blockchain network. In the next step, the JSON format data will be processed via an IPFS protocol, which creates a hash of the data. A smart contract stores the hash to the public blockchain network and keeps the original JSON data available on the IPFS node. By querying from the public blockchain to the application for the hash or any other identifier of the data content, the data will be visible without any limitation to the public. Any modification will be visible due to the hash and its modification history.

A key aspect of this embodiment involves the processing of data from a private blockchain network to a public blockchain network. Therefore, the private blockchain becomes connected via an interoperability application, which uses a temporary storage reliant on an IPFS protocol, to the public blockchain. The interoperability application enables the user to show the data from the private blockchain to a public instance. Therefore, the interoperability application enables the user to interact with the IPFS, to store the data, and transact the hash on the public blockchain. The interoperability application enables the user to query for the hash of the file, as well as for the information to receive the data from the public blockchain.

The private blockchain network is defined as a Hyperledger fabric consortium blockchain protocol, which may be implemented on either the solo consensus algorithm or the Kafka zookeeper algorithm. The so called "world state", which defines the current information about the block and its contents, is stored on a CouchDB. The public blockchain network is defined as the Ethereum public blockchain, which relies on a proof-of-work consensus protocol.

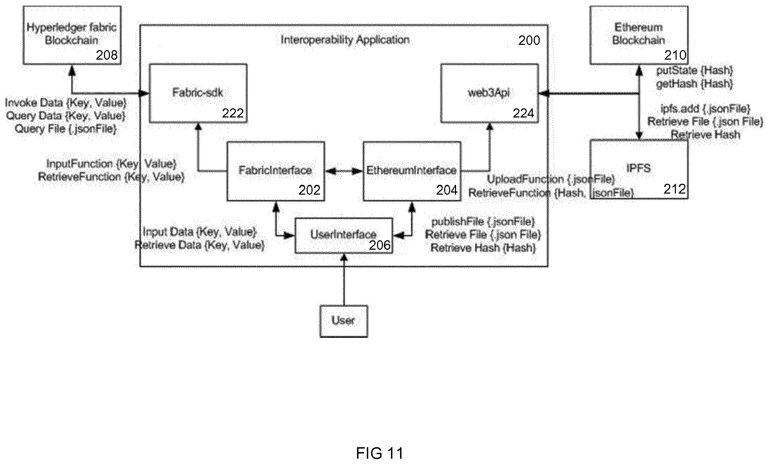

FIGURE 11 is a schematic overview of an embodiment of the interoperability application. Previous network architectures also rely on similar middleware applications to enable interoperability, but fail to operate in realistic implementations due to the previously described problems regarding interoperability and transaction costs. To overcome these problems, this invention establishes a network architecture, which relies on a middleware application.

The middleware application, a so-called interoperability application, has two interface (communication) modules, one for each blockchain network. First, Fabricinterface (202), to establish the communication to the private Blockchain consortium (InputFunction, RetrieveFunction, etc.) and second, the EthereumInterface (204), to establish the communication to the gateway (web3Api) of the Ethereum blockchain (210) as well as to the IPFS (212) (UploadFunction, RetrieveFunction, etc.). The user interacts over a UserInterface (206) with both of the communication establishing interfaces to establish interoperability between both blockchain protocols by performing the necessary functions (input data, retrieve data, publish file, retrieve file, retrieve hash, etc.). The web3Api (224) enables communication from the EthereumInterface (204) to the Ethereum blockchain (210) and the IPFS (212) by executing a smart contract that executes the necessary functions (putState, getHash, ipfs.add, retrieve file, retrieve hash, etc.). The Fabric-sdk (222) enables communication between the FabricInterface (202) and the Hyperledger fabric blockchain (208) by proceeding with the necessary functions (Invoke data, query data, query file, etc.).

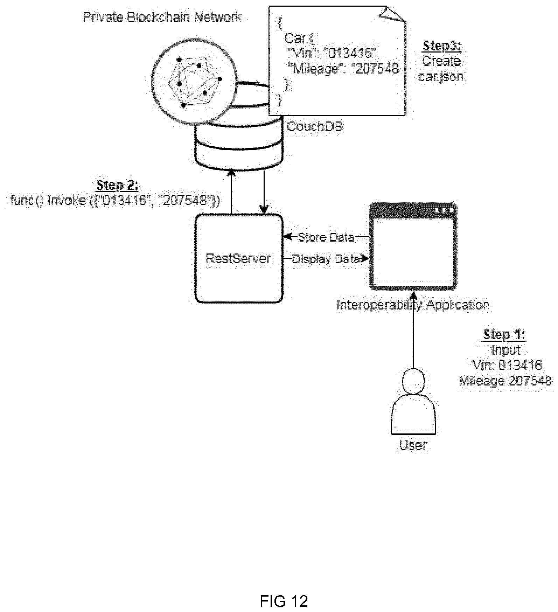

FIGURE 12 illustrates an example of registering data on the private blockchain network using the interoperability application. As before, the figure shows the interoperability application using a RESTful server and accessing the private blockchain network. The user (in this case of the private blockchain network) has the ability to enter data into the interoperability application. In this example, the data is related to a "Car", which has a Vehicle Identifying Number ("VIN") and a "Mileage" value. The input from the user is described in Step 1, where the input of a VIN value "013416" and a Mileage value of "207548" is made. These values are processed to the private blockchain by the "Invoke" function (Step 2). The "Invoke" function mechanism stores the data on the blockchain and creates the file "car.json" on the CouchDB (Step 3).

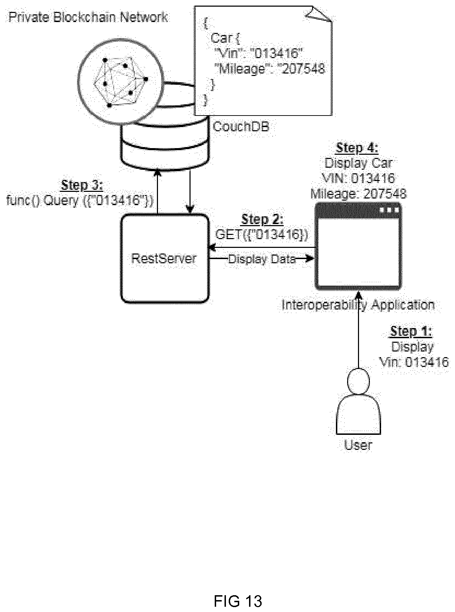

FIGURE 13, shown in the same format, illustrates an example of querying the data on the private blockchain network using the interoperability application. To query the stored data from the private blockchain network, the user will call a "Display" command with the related "VIN" that they wish to query. The expected return is the "VIN" and the "Mileage" (Step 1). By sending a "GET" command to the RestServer from the interoperability application, with the queried value "013416" (Step 2), the "Query" function on the blockchain is executed with the same value (Step 3). The data is displayed in the interoperability application from the JSON format (Step 4).

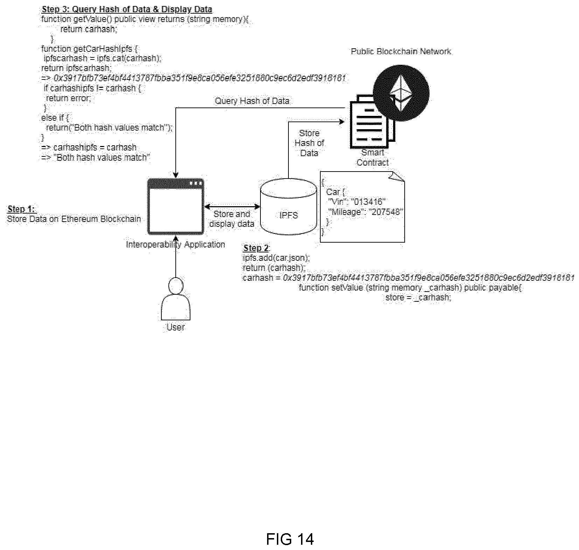

FIGURE 14 illustrates an example of storing, querying, and displaying data to and from the public blockchain, and solving the interoperability problem. Thus this diagram shows the public blockchain network, along with the IPFS. To store the JSON format on the public blockchain, the user calls the command "Store Data" on Ethereum blockchain (Step 1) - of course the command here and elsewhere may be called via the GUI and user may write in plain English or by means of a form. The file "car.json" is uploaded to the IPFS by executing the smart contract. The hash value is generated and returned. The hash value is stored to Ethereum via the "setValue" function (Step 2), for example as shown by the code in the figure. To display the stored data from the IPFS as well as from the Ethereum Blockchain - in order to gain evidence about the correctness - the data has to be queried and compared (Step 3). Therefore, the "getValue" function is called (for example as shown by the code here) to retrieve the hash that is stored before. The function to get the hash from the IPFS is called and returned. Both of the hash values are compared. If they are not the same, an error will be thrown. In this illustrated example, they are the same and the output "Both hash values match" is generated.

To demonstrate the ability of the interoperability application to reduce transaction cost, the following example is provided. A JSON file from a CouchDB, is published to the Ethereum public blockchain via processing through the interoperability application layer.

For example a file with 21 sample key/value pairs is 1010 bytes in size. A Solidity-based smart contract stores the JSON file on the IPFS. The IPFS processes the transaction further to the public Ethereum blockchain after creating a hash from the stored file.

In order to provide the worked example, four sample files are created. All of the sample files are stored in a JSON format and the explicit content is retrieved from the CouchDB. The first sample file consists of 4096 characters and a total file size of 4096 Bytes (4.096 Kilobytes); the second file consists of 8192 characters and a total file size of 8192 Bytes; the third sample file consists of 16384 characters and a total file size of 16384 Bytes; and the last sample file consists of 32768 characters and a total file size of 32768 bytes.

The calculated transaction costs for storing this amount of data may be retrieved from FIGURE 4 or calculated with the previously presented formula for gas consumption in a transaction. The first sample, for example, yields:

Data Size: 4096 Bytes
Gas Used: 2581000
Gas Price (average of 2 Gwei): 0.71 USD

By processing the data input and storing the sample JSON file on the IPFS, the following hash is retrieved and stored to the public Ethereum Blockchain:
*0x3917bfb73ef4bf4413787fbba351fg9e8ca056efe3251880c9ec6d2edf3918181.*

The transaction cost for storing the hash is:

Data Size: 66 Bytes
Gas Used: 36128
Gas Price: 0.0097 USD

TABLE 1 shows a working example, which consists of the above four samples. The data sample is processed as a JSON file and the exact data size is listed in the table. It may be seen that the overall gas price for any size of data when using the interoperability application was limited to 0.0097 USD (according to the Ethereum price at the time of writing).

| Sample Number | Data Size (bytes) | Gas Used | Gas Price (USD) |
|---|---|---|---|
| 1 | 4096 | 2581000 | 0.71 |
| 1 (using interoperability application) | 66 | 36128 | 0.0097 |
| 2 | 8192 | 5141000 | 1.41 |
| 2 (using interoperability application) | 66 | 36128 | 0.0097 |
| 3 | 16384 | 10261000 | 2.81 |
| 3 (using interoperability application) | 66 | 36128 | 0.0097 |
| 4 | 32768 | 20501000 | 44.88 |
| 4 (using interoperability application) | 66 | 36128 | 0.0097 |

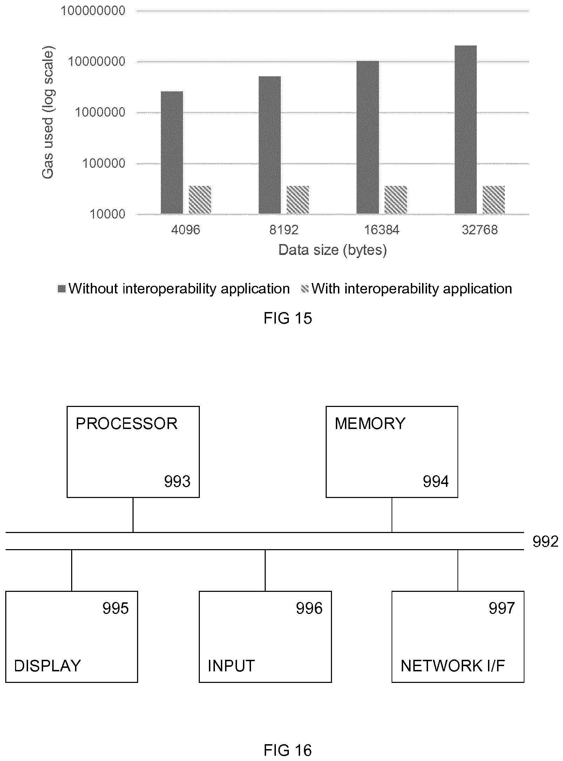

FIGURE 15 indicates the gas usage with varying data size and compares the samples before and after processing with the interoperability application. Note the semi-log scale.

Invention embodiments proposes an interoperability approach between the Hyperledger fabric and the Ethereum protocol. Considering the technological field of blockchain in its entirety, the functionality of the embodiments may be adopted to ensure interoperability between other blockchain-based protocols in the same way. The embodiments enable use-cases that rely on hybrid solutions between private and public blockchain networks. By using such a solution, data that was created in a private blockchain network may be processed to the public. Asset value reliability as well as transparency of assets is a main benefit.

Invention embodiments may provide any of the following:

(1) System construction by using an interoperability application which processes data from private consortium blockchain networks to public blockchain networks to ensure interoperability and low communication cost during the whole process. (System construction shown in Figure 10)

(2) Internal construction of interoperability of the application, which has two interfaces to public blockchain networks and private chain networks, where interfaces to public blockchain networks coordinates with IPFS by generating hash value from files and smart contracts to ensure interoperability and low communication cost during the whole process. (Internal construction of interoperability application shown in Figure 11)

(3) Software process based on an interoperability application which processes data from private consortium blockchain networks to public blockchain networks to ensure interoperability and low communication cost during the whole process. (Data Process shown in Figure 8)

(4) Software process based on an interoperability application which processes data from private consortium blockchain networks to public blockchain networks, while invoking a log function of private consortium blockchain networks for ensuring data authenticity during the whole process. (Data Process shown in Figure 9)

FIGURE 16 is a block diagram of a computing device, such as a data storage server (or the RESTful server described herein), which embodies the present invention, and which may be used to implement a method of an embodiment of enabling data access from a first blockchain network via a second blockchain network. The computing device comprises a processor 993, and memory, 994 which may carry out the method of Figure 5, for example. Optionally, the computing device also includes a network interface 997 for communication with other computing devices, for example with other computing devices of invention embodiments.

For example, an embodiment may be composed of a network of such computing devices. Optionally, the computing device also includes one or more input mechanisms such as keyboard and mouse 996, and a display unit such as one or more monitors 995. The components are connectable to one another via a bus 992.

The memory 994 may include a computer readable medium, a term which may refer to a single medium or multiple media (e.g., a centralized or distributed database and/or associated caches and servers) configured to carry computer-executable instructions or have data structures stored thereon. Computer-executable instructions may include, for example, instructions and data accessible by and causing a general purpose computer, special purpose computer, or special purpose processing device (e.g., one or more processors) to perform one or more functions or operations. Thus, the term "computer-readable storage medium" may also include any medium that is capable of storing, encoding or carrying a set of instructions for execution by the machine and that cause the machine to perform any one or more of the methods of the present disclosure. The term "computer-readable storage medium" may accordingly be taken to include, but not be limited to, solid-state memories, optical media and magnetic media. By way of example, and not limitation, such computer-readable media may include non-transitory computer-readable storage media, including Random Access Memory (RAM), Read-Only Memory (ROM), Electrically Erasable Programmable Read-Only Memory (EEPROM), Compact Disc Read-Only Memory (CD-ROM) or other optical disk storage, magnetic disk storage or other magnetic storage devices, flash memory devices (e.g., solid state memory devices).

The processor 993 is configured to control the computing device and execute processing operations, for example executing code stored in the memory to implement the various different functions of the first interface 102, second interface 104 and user interface 106 described here and in the claims. The memory 994 stores data being read and written by the processor 993. As referred to herein, a processor may include one or more general-purpose processing devices such as a microprocessor, central processing unit, or the like. The processor may include a complex instruction set computing (CISC) microprocessor, reduced instruction set computing (RISC) microprocessor, very long instruction word (VLIW) microprocessor, or a processor implementing other instruction sets or processors implementing a combination of instruction sets. The processor may also include one or more special-purpose processing devices such as an application specific integrated circuit (ASIC), a field programmable gate array (FPGA), a digital signal processor (DSP), network processor, or the like. In one or more embodiments, a processor is configured to execute instructions for performing the operations and steps discussed herein.

The display unit 995 may display a representation of data stored by the computing device and may also display a cursor and dialog boxes and screens enabling interaction between a user and the programs and data stored on the computing device, as part of the GUI described herein. The input mechanisms 996 may enable a user to input data and instructions to the computing device, for example to store or retrieve data from the first blockchain network or retrieve the data via the second blockchain network.

The network interface (network I/F) 997 may be connected to a network, such as the Internet, and is connectable to other such computing devices via the network. The network I/F 997 may control data input/output from/to other apparatus via the network. Other peripheral devices such as microphone, speakers, printer, power supply unit, fan, case, scanner, trackerball etc. may be included in the computing device.

Methods embodying the present invention may be carried out on a computing device such as that illustrated in FIGURE 16. Such a computing device need not have every component illustrated in FIGURE 16, and may be composed of a subset of those components. A method embodying the present invention may be carried out by a single computing device in communication with one or more data storage servers via a network. The computing device may be a data storage itself storing the data accessed from a first blockchain via a second blockchain network.

A method embodying the present invention may be carried out by a plurality of computing devices operating in cooperation with one another. One or more of the plurality of computing devices may be a data storage server storing at least a portion of the data accessed from a first blockchain via a second blockchain network.

## Claims

1. A computer-implemented method of enabling an interoperability application access to data uploaded from a first blockchain network to a second blockchain network, wherein the first blockchain network is a private blockchain network with only trusted users able to store and/or access data on the first blockchain network, and the second blockchain network is a public blockchain network, which is openly accessible to anyone, the method comprising:

   retrieving original data stored on the first blockchain network and storing a copy of the original data into a file system associated with the second blockchain network (S2);

retrieving a hash value of the copy of the original data, the copy of the original data being stored in the file system, and storing the hash value on the second blockchain network (S4); and

querying the copy of the original data in the file system and the hash value stored on the second blockchain network to retrieve the copy of the original data (S6).

2. The method of claim 1, further comprising comparing a hash value of the original data, the original data being stored on the first blockchain network, with the hash value of the copy of the original data, the copy of the original data being in the file system.

3. The method of claim 1 or 2, further comprising comparing a hash value of data, the data being stored on the first blockchain network, with the hash value stored on the second blockchain network.

4. The method of claim 1 or claim 2, wherein the first blockchain network and second blockchain network operate using different blockchain protocols.

5. The method of any preceding claim, wherein the original data from the first blockchain network is of a key/value format.

6. The method of any preceding claim, wherein the file system associated with the second blockchain network is based on a content-addressable distributed file system protocol.

7. The method of any preceding claim, further comprising implementing the storage of the hash value on the second blockchain with a smart contract.

8. The method of any preceding claim, further comprising:

retrieving a log file for the original data from the first blockchain network and storing it in the file system associated with the second blockchain network; and

comparing the log file in the file system with metadata of the file for the hash value stored on the second blockchain.

9. The method of claim 8, wherein the log file is further stored on the first blockchain network.

10. An interoperability application (100) which, when run on a computer, interfaces between a first blockchain network (108) and a second blockchain network (110), wherein the first blockchain network is a private blockchain network with only trusted users able to store and/or access data on the first blockchain network; and the second blockchain network is a public blockchain network, which is openly accessible to anyone, the application providing:

a first interface (102) with the first blockchain network operable to retrieve original data stored on the first blockchain network;

a second interface (104) with the second blockchain network (110) operable to upload a copy of the original data to a file system (112) associated with the second blockchain network (110), return a hash value of the copy of the original data, the copy of the original data being stored in the file system, and store the hash value on the second blockchain network (110); and

a user interface (106) operable to send a query to compare the hash value on the second blockchain network (110) with the corresponding copy of the original data in the file system (112).

11. The application (100) of claim 10, wherein, when the compared copy of the original data matches the stored hash value, the user interface (106) is further operable to retrieve the copy of the original data from the file system (112).

12. The application (100) of claim 10 or claim 11, wherein the first interface (102) comprises:

a first communication module (202) that establishes communication between the application (100) and the first blockchain network (108); and

a first Application Programming interface, API, (222) that provides functionality for the communication between the first communication module (202) and the first blockchain network (108).

13. The application (100) of any of claim 10 to claim 12, wherein the second interface (104) comprises:

a second communication module (204) that establishes communication between the application (100) and a gateway API (224) to the second blockchain network (110) and/or between the application (100) and the file system (112) associated with the second blockchain network (110); and

the gateway API (224) that provides functionality for the communication between the second communication module (204) and the second blockchain network (110) and between the second communication module (204) and the file system (112) associated with the second blockchain network (110) by means of implementing smart contracts.

14. A computer apparatus arranged to carry out a method of enabling an interoperability application access to data uploaded from a first blockchain network to a second blockchain network, wherein the first blockchain network is a private blockchain network with only trusted users able to store and/or access data on the first blockchain network, and the second blockchain network is a public blockchain network, which is openly accessible to anyone, the computer apparatus comprising:

a memory; and
a processor configured to:

retrieve original data stored on the first blockchain network and store a copy of the original data into a file system associated with the second blockchain network;
retrieve a hash value of the copy of the original data, the copy of the original data being stored in the file system, and store the hash value on the second blockchain network; and
compare the copy of the original data in the file system and the hash value stored on the second blockchain network to check for data identicality.

15. A computer program including instructions which when downloaded onto a computer configures the computer to carry out the method of any of claims 1 to 9.

**Patentansprüche**

1. Computerimplementiertes Verfahren zum Ermöglichen des Zugriffs einer Interoperabilitätsanwendung auf Daten, die von einem ersten Blockchain-Netzwerk in ein zweites Blockchain-Netzwerk hochgeladen werden, wobei das erste Blockchain-Netzwerk ein privates Blockchain-Netzwerk ist, in dem nur vertrauenswürdige Benutzer Daten auf dem ersten Blockchain-Netzwerk speichern und/oder darauf zugreifen können, und das zweite Blockchain-Netzwerk ein öffentliches Blockchain-Netzwerk ist, das für jedermann offen zugänglich ist, wobei das Verfahren Folgendes umfasst:

Abrufen von in dem ersten Blockchain-Netzwerk gespeicherten Originaldaten und Speichern einer Kopie der Originaldaten in einem Dateisystem, das dem zweiten Blockchain-Netzwerk zugeordnet ist (S2);
Abrufen eines Hash-Werts der Kopie der Originaldaten, wobei die Kopie der Originaldaten in dem Dateisystem gespeichert wird, und Speichern des Hash-Werts in dem zweiten Blockchain-Netzwerk (S4); und
Abfragen der Kopie der Originaldaten in dem Dateisystem und des in dem zweiten Blockchain-Netzwerk gespeicherten Hash-Werts, um die Kopie der Originaldaten abzurufen (S6).

2. Verfahren nach Anspruch 1, ferner umfassend Vergleichen eines Hash-Werts der Originaldaten, wobei die Originaldaten in dem ersten Blockchain-Netzwerk gespeichert sind, mit dem Hash-Wert der Kopie der Originaldaten, wobei sich die Kopie der Originaldaten in dem Dateisystem befindet.

3. Verfahren nach Anspruch 1 oder 2, ferner umfassend Vergleichen eines Hash-Werts von Daten, wobei die Daten in dem ersten Blockchain-Netzwerk gespeichert sind, mit dem Hash-Wert, der in dem zweiten Blockchain-Netzwerk gespeichert ist.

4. Verfahren nach Anspruch 1 oder Anspruch 2, wobei das erste Blockchain-Netzwerk und das zweite Blockchain-Netzwerk unter Verwendung unterschiedlicher Blockchain-Protokolle arbeiten.

5. Verfahren nach einem der vorhergehenden Ansprüche, wobei die Originaldaten aus dem ersten Blockchain-Netzwerk ein Schlüssel-/Wert-Format haben.

**6.** Verfahren nach einem der vorhergehenden Ansprüche, wobei das dem zweiten Blockchain-Netzwerk zugeordnete Dateisystem auf einem inhaltsadressierbaren verteilten Dateisystemprotokoll basiert.

**7.** Verfahren nach einem der vorhergehenden Ansprüche, ferner umfassend Implementieren der Speicherung des Hash-Werts auf der zweiten Blockchain mit einem Smart Contract.

**8.** Verfahren nach einem der vorhergehenden Ansprüche, ferner umfassend:

Abrufen einer Protokolldatei für die Originaldaten aus dem ersten Blockchain-Netzwerk und Speichern dieser in dem Dateisystem, das dem zweiten Blockchain-Netzwerk zugeordnet ist; und
Vergleichen der Protokolldatei in dem Dateisystem mit Metadaten der Datei für den auf der zweiten Blockchain gespeicherten Hash-Wert.

**9.** Verfahren nach Anspruch 8, wobei die Protokolldatei ferner im ersten Blockchain-Netzwerk gespeichert ist.

**10.** Interoperabilitätsanwendung (100), die bei Ausführung auf einem Computer eine Schnittstelle zwischen einem ersten Blockchain-Netzwerk (108) und einem zweiten Blockchain-Netzwerk (110) herstellt, wobei das erste Blockchain-Netzwerk ein privates Blockchain-Netzwerk ist, in dem nur vertrauenswürdige Benutzer Daten auf dem ersten Blockchain-Netzwerk speichern und/oder darauf zugreifen können; und das zweite Blockchain-Netzwerk ein öffentliches Blockchain-Netzwerk ist, das für jedermann offen zugänglich ist, wobei die Anwendung Folgendes bereitstellt:

eine erste Schnittstelle (102) mit dem ersten Blockchain-Netzwerk, die dazu betriebsfähig ist, in dem ersten Blockchain-Netzwerk gespeicherte Originaldaten abzurufen;
eine zweite Schnittstelle (104) mit dem zweiten Blockchain-Netzwerk (110), die dazu betriebsfähig ist, eine Kopie der Originaldaten in ein dem zweiten Blockchain-Netzwerk (110) zugeordnetes Dateisystem (112) hochzuladen und einen Hash-Wert der Kopie der Originaldaten zurückzugeben, wobei die Kopie der Originaldaten in dem Dateisystem gespeichert ist, und den Hash-Wert in dem zweiten Blockchain-Netzwerk (110) zu speichern; und
eine Benutzerschnittstelle (106), die dazu betriebsfähig ist, eine Anfrage zu senden, um den Hash-Wert in dem zweiten Blockchain-Netzwerk (110) mit der entsprechenden Kopie der Originaldaten in dem Dateisystem (112) zu vergleichen.

**11.** Anwendung (100) nach Anspruch 10, wobei, wenn die verglichene Kopie der Originaldaten mit dem gespeicherten Hash-Wert übereinstimmt, die Benutzerschnittstelle (106) ferner dazu betriebsfähig ist, die Kopie der Originaldaten aus dem Dateisystem (112) abzurufen.

**12.** Anwendung (100) nach Anspruch 10 oder Anspruch 11, wobei die erste Schnittstelle (102) umfasst:

ein erstes Kommunikationsmodul (202), das die Kommunikation zwischen der Anwendung (100) und dem ersten Blockchain-Netzwerk (108) herstellt; und
eine erste Anwendungsprogrammierschnittstelle, API, (222), die Funktionalität für die Kommunikation zwischen dem ersten Kommunikationsmodul (202) und dem ersten Blockchain-Netzwerk (108) bereitstellt.

**13.** Anwendung (100) nach einem der Ansprüche 10 bis 12, wobei die zweite Schnittstelle (104) umfasst:

ein zweites Kommunikationsmodul (204), das eine Kommunikation zwischen der Anwendung (100) und einer Gateway-API (224) zu dem zweiten Blockchain-Netzwerk (110) und/oder zwischen der Anwendung (100) und dem Dateisystem (112), das dem zweiten Blockchain-Netzwerk (110) zugeordnet ist, herstellt; und
die Gateway-API (224), die Funktionalität für die Kommunikation zwischen dem zweiten Kommunikationsmodul (204) und dem zweiten Blockchain-Netzwerk (110) und zwischen dem zweiten Kommunikationsmodul (204) und dem Dateisystem (112), das dem zweiten Blockchain-Netzwerk (110) zugeordnet ist, mittels Implementierung von Smart Contracts bereitstellt.

**14.** Computergerät, das dazu ausgelegt ist, ein Verfahren zum Ermöglichen des Zugriffs einer Interoperabilitätsanwendung auf Daten auszuführen, die von einem ersten Blockchain-Netzwerk in ein zweites Blockchain-Netzwerk hochgeladen werden, wobei das erste Blockchain-Netzwerk ein privates Blockchain-Netzwerk ist, in dem nur vertrauenswürdige Benutzer Daten auf dem ersten Blockchain-Netzwerk speichern und/oder darauf zugreifen können, und das zweite Blockchain-Netzwerk ein öffentliches Blockchain-Netzwerk ist, das für jedermann offen zugänglich ist, wobei das Computergerät Folgendes umfasst:

einen Speicher; und
einen Prozessor, der zu Folgendem konfiguriert ist:

Abrufen von in dem ersten Blockchain-Netzwerk gespeicherten Originaldaten und Speichern einer Kopie der Originaldaten in einem Dateisystem, das dem zweiten Blockchain-Netzwerk zugeordnet ist;
Abrufen eines Hash-Werts der Kopie der Originaldaten, wobei die Kopie der Originaldaten in dem Dateisystem gespeichert wird, und Speichern des Hash-Werts in dem zweiten Blockchain-Netzwerk; und
Vergleichen der Kopie der Originaldaten in dem Dateisystem mit dem in dem zweiten Blockchain-Netzwerk gespeicherten Hash-Wert, um die Datenidentität zu überprüfen.

15. Computerprogramm mit Anweisungen, die beim Herunterladen auf einen Computer den Computer dazu konfigurieren, das Verfahren nach einem der Ansprüche 1 bis 9 auszuführen.

## Revendications

1. Procédé mis en œuvre par ordinateur pour permettre à une application d'interopérabilité d'accéder à des données chargées depuis un premier réseau de chaînes de blocs vers un second réseau de chaînes de blocs, dans lequel le premier réseau de chaînes de blocs est un réseau de chaînes de blocs privé avec uniquement des utilisateurs de confiance capables de stocker et/ou d'accéder à des données sur le premier réseau de chaînes de blocs, et le second réseau de chaînes de blocs est un réseau de chaînes de blocs public, qui est ouvertement accessible à tous, le procédé comprenant :

la récupération de données d'origine stockées sur le premier réseau de chaînes de blocs et le stockage d'une copie des données d'origine dans un système de fichiers associé au second réseau de chaînes de blocs (S2) ;
la récupération d'une valeur de hachage de la copie des données d'origine, la copie des données d'origine étant stockée dans le système de fichiers, et le stockage de la valeur de hachage sur le second réseau de chaînes de blocs (S4) ; et
l'interrogation de la copie des données d'origine dans le système de fichiers et la valeur de hachage stockée sur le second réseau de chaînes de blocs pour récupérer la copie des données d'origine (S6).

2. Procédé selon la revendication 1, comprenant en outre la comparaison d'une valeur de hachage des données d'origine, les données d'origine étant stockées sur le premier réseau de chaînes de blocs, avec la valeur de hachage de la copie des données d'origine, la copie des données d'origine étant située dans le système de fichiers.

3. Procédé selon la revendication 1 ou 2, comprenant en outre la comparaison d'une valeur de hachage de données, les données étant stockées sur le premier réseau de chaînes de blocs, avec la valeur de hachage stockée sur le second réseau de chaînes de blocs.

4. Procédé selon la revendication 1 ou la revendication 2, dans lequel le premier réseau de chaînes de blocs et le second réseau de chaînes de blocs fonctionnent à l'aide de protocoles de chaînes de blocs différents.

5. Procédé selon une quelconque revendication précédente, dans lequel les données d'origine du premier réseau de chaînes de blocs sont au format clé/valeur.

6. Procédé selon une quelconque revendication précédente, dans lequel le système de fichiers associé au second réseau de chaînes de blocs est basé sur un protocole de système de fichiers distribué adressable par le contenu.

7. Procédé selon une quelconque revendication précédente, comprenant en outre la mise en œuvre du stockage de la valeur de hachage sur la seconde chaîne de blocs avec un contrat intelligent.

8. Procédé selon une quelconque revendication précédente, comprenant en outre :

la récupération d'un fichier journal pour les données d'origine du premier réseau de chaînes de blocs et le stockage de celui-ci dans le système de fichiers associé au second réseau de chaînes de blocs ; et
la comparaison du fichier journal dans le système de fichiers avec les métadonnées du fichier pour la valeur de hachage stockée sur la seconde chaîne de blocs.

9. Procédé selon la revendication 8, dans lequel le fichier journal est en outre stocké sur le premier réseau de chaînes de blocs.

10. Application d'interopérabilité (100) qui, lorsqu'elle est exécutée sur un ordinateur, s'interface entre un premier réseau de chaînes de blocs (108) et un second réseau de chaînes de blocs (110), dans laquelle le premier réseau de chaînes de blocs est un réseau de chaînes de blocs privé avec uniquement des utilisateurs de confiance capables de stocker et/ou d'accéder à des données sur le premier réseau de chaînes de blocs ; et le second réseau de chaînes de blocs est un réseau de chaînes de blocs public, qui est ouvertement accessible à tous, l'application prévoyant :

une première interface (102) avec le premier réseau de chaînes de blocs pouvant fonctionner de manière à récupérer des données d'origine stockées sur le premier réseau de chaînes de blocs ;
une seconde interface (104) avec le second réseau de blocs de chaînes (110) pouvant fonctionner de manière à charger une copie des données d'origine vers un système de fichiers (112) associé au second réseau de chaînes de blocs (110), renvoyer une valeur de hachage de la copie des données d'origine, la copie des données d'origine étant stockée dans le système de fichiers, et stocker la valeur de hachage sur le second réseau de chaînes de blocs (110) ; et
une interface utilisateur (106) pouvant fonctionner de manière à envoyer une requête pour comparer la valeur de hachage sur le second réseau de chaînes de blocs (110) avec la copie correspondante des données d'origine dans le système de fichiers (112).

11. Application (100) selon la revendication 10, dans laquelle, lorsque la copie comparée des données d'origine correspond à la valeur de hachage stockée, l'interface utilisateur (106) peut en outre fonctionner de manière à récupérer la copie des données d'origine à partir du système de fichiers (112).

12. Application (100) selon la revendication 10 ou la revendication 11, dans laquelle la première interface (102) comprend :

un premier module de communication (202) qui établit une communication entre l'application (100) et le premier réseau de chaînes de blocs (108) ; et
une première interface de programmation d'application, API, (222) qui fournit une fonctionnalité pour la communication entre le premier module de communication (202) et le premier réseau de chaînes de blocs (108).

13. Application (100) selon l'une quelconque des revendications 10 à 12, dans laquelle la seconde interface (104) comprend :

un second module de communication (204) qui établit une communication entre l'application (100) et une API de passerelle (224) vers le second réseau de chaînes de blocs (110) et/ou entre l'application (100) et le système de fichiers (112) associé au second réseau de chaînes de blocs (110) ; et
l'API de passerelle (224) qui fournit une fonctionnalité pour la communication entre le second module de communication (204) et le second réseau de chaîne de blocs (110) et entre le second module de communication (204) et le système de fichiers (112) associé au second réseau de chaînes de blocs (110) au moyen de la mise en œuvre de contrats intelligents.

14. Appareil informatique conçu pour mettre en œuvre un procédé pour permettre à une application d'interopérabilité d'accéder à des données chargées depuis un premier réseau de chaînes de blocs vers un second réseau de chaînes de blocs, dans lequel le premier réseau de chaînes de blocs est un réseau de chaînes de blocs privé avec uniquement des utilisateurs de confiance capables de stocker et/ou d'accéder à des données sur le premier réseau de chaînes de blocs, et le second réseau de chaînes de blocs est un réseau de chaînes de blocs public, qui est ouvertement accessible à tous, l'appareil informatique comprenant :

une mémoire ; et
un processeur configuré pour :

récupérer des données d'origine stockées sur le premier réseau de chaînes de blocs et stocker une copie des données d'origine dans un système de fichiers associé au second réseau de chaînes de blocs ;

récupérer une valeur de hachage de la copie des données d'origine, la copie des données d'origine étant stockée dans le système de fichiers, et stocker la valeur de hachage sur le second réseau de chaînes de blocs ; et

comparer la copie des données d'origine dans le système de fichiers et la valeur de hachage stockée sur le second réseau de chaînes de blocs pour vérifier que les données sont identiques.

15. Programme informatique comprenant des instructions qui, lorsqu'elles sont téléchargées sur un ordinateur, configurent l'ordinateur pour mettre en œuvre le procédé selon l'une quelconque des revendications 1 à 9.

Relevant Data (given by car seller):

Pictures of vehicle,
Mileage,
Construction Year,
Number of owners

Intermediate
to establish
trust

Second-Hand
Car Market
Web / App

No trust about car quality from buyer to seller

Car Seller

Car Buyer

FIG 1

Private Blockchain

CarSampleData:

Manufacturer: SampleOEM
CarType: SampleType
CarVin: 1278092883
Color: BlackMetallic
Mileage: 107.320km
Error Log: P0418, P0B75
AccidentLog: 3

Second-hand Car Market
Websites / Applications

Access to get information
about the car

No Trust

Seller

Buyer

FIG 2

FIG 3

FIG 4

Retrieve the data from the first blockchain network and store it in a file system associated with the second blockchain network ⟋ S2

Retrieving a hash value of the data and store the hash value on the second blockchain network ⟋ S4

Query to compare the data in the file system and the hash value stored on the second blockchain and to retrieve data ⟋ S6

FIG 5

Interoperability Application

First blockchain network 108

First interface 102

Second interface 104

Second blockchain network 110

File system 112

User Interface 106

100

User

FIG 6

FIG 7

Input Data from User — S12

Invoke Data to Hyperledger fabric Blockchain — S14
Invoke{key,value}

Store Data on CouchDB — S16
.json file with {key, value} pairs is created

Evidence:
.json{key, value}Hyperledger fabric = {key, value} IPFS
&
hash IPFS = hash Ethereum — S26

Retrieve Data from Hyperledger fabric Blockchain — S18
Query {key}
Query {value}

Query .json File — S24

Store .json File on IPFS and retrieve hash — S20
ipfs.add(.json File)
Return (hash)

getState(hash)

Store Hash on Ethereum Blockchain — S22
setState(hash)

FIG 8

FIG 9

Private Blockchain Network

Public Blockchain Network

Query Hash of Data

CouchDB

.json File

Store Hash of Data

Smart Contract

Store Data

RestServer

Display Data

Store and display data

IPFS

Interoperability Application

User

FIG 10

FIG 11

Private Blockchain Network

```
{
Car {
"Vin": "013416"
"Mileage": "207548"
}
}
```

**Step3:**
Create
car.json

CouchDB

**Step 2:**
func() Invoke ({"013416", "207548"})

RestServer

Store Data
Display Data

Interoperability Application

**Step 1:**
Input
Vin: 013416
Mileage 207548

User

FIG 12

Private Blockchain Network

{
Car {
  "Vin": "013416"
  "Mileage": "207548
}
}

CouchDB

**Step 4:**
Display Car
VIN: 013416
Mileage: 207548

**Step 3:**
func() Query ({"013416"})

**Step 2:**
GET({"013416})

RestServer —Display Data→

Interoperability Application

**Step 1:**
Display
Vin: 013416

User

FIG 13

Step 3: Query Hash of Data & Display Data
function getValue() public view returns (string memory){
    return carhash;
}
function getCarHashIpfs {
 ipfscarhash = ipfs.cat(carhash);
return ipfscarhash;
=> 0x3917bfb73ef4bf4413787fbba351f9e8ca056efe3251880c9ec6d2edf3918181
 if carhashipfs != carhash {
  return error;
}
else if {
  return("Both hash values match");
}
=> carhashipfs = carhash
=> "Both hash values match"

Public Blockchain Network

Query Hash of Data

Store
Hash of
Data

Smart
Contract

Step 1:
Store Data on Ethereum Blockchain

Store and
display data

IPFS

Car {
 "Vin": "013416"
 "Mileage": "207548"
}

Interoperability Application

Step 2:
ipfs.add(car.json);
return (carhash);
carhash = 0x3917bfb73ef4bf4413787fbba351f9e8ca056efe3251880c9ec6d2edf3918181
function setValue (string memory _carhash) public payable{
    store = _carhash;

User

FIG 14

28

FIG 15

FIG 16

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018219685 A1

- WO 2019072301 A2

**Non-patent literature cited in the description**

- **YIMING JIANG et al.** A Cross-Chain Solution to Integrating Multiple Blockchains for IoT Data Management. *SENSORS,* May 2019, vol. 19 (9
- **MIGUELMOTA.** *docstampit.it,* 05 May 2018, https://github.com/CoinCircle/docstamp.it

- *DocStamp.sol,* 12 November 2017, https://github.com/CoinCircle/docstamp.it/blob/master/contracts/DocStamp.sol